# EUROPÄISCHE PATENTSCHRIFT

(11) **EP 3 723 659 B1**
(45) Veröffentlichungstag und Bekanntmachung des Hinweises auf die Patenterteilung: **20.04.2022**
(21) Anmeldenummer: 19752161.0
(22) Anmeldetag: 05.08.2019
(51) Int. Cl.: A61C 5/77, A61C 13/00, A61C 13/08, B33Y 10/00

(54) **VERFAHREN ZUR HERSTELLUNG EINES DENTALBAUTEILS**
METHOD FOR PRODUCING A DENTAL COMPONENT
PROCÉDÉ POUR LA FABRICATION D'UN ÉLÉMENT DENTAIRE

(30) Priorität: 06.08.2018 DE 102018119078
(43) Veröffentlichungstag der Anmeldung: 21.10.2020
(73) Patentinhaber: Redios-Tec GmbH, 83395 Freilassing (DE)
(72) Erfinder: MILLER, Stephan, 83278 Traunstein (DE)
(74) Vertreter: Manitz Finsterwald Patent- und Rechtsanwaltspartnerschaft mbB
(86) Internationale Anmeldenummer: PCT/EP2019/071048
(87) Internationale Veröffentlichungsnummer: WO 2020/030605

(56) Entgegenhaltungen:
- EP-A2- 2 082 703
- WO-A1-02/09612
- DE-A1-102016 225 208
- US-A1- 2002 125 619
- US-A1- 2014 377 718

## Beschreibung

Die vorliegende Erfindung betrifft ein Verfahren zur Herstellung zumindest eines Dentalbauteils, insbesondere eines Zahnersatzes oder-teilersatzes.

Verfahren zur Herstellung von Dentalbauteilen sind grundsätzlich bekannt und umfassen meist mehrere aufwändige Einzelschritte, die größtenteils manuell durchgeführt werden. In einem ersten Schritt wird ein Gebissabdruck des betroffenen Patienten angefertigt. Mit Hilfe dieses Gebissabdruckes kann anschließend das Modell für das zu erzeugende Dentalbauteil gefertigt werden. Das Modell wird hierfür beispielsweise anhand eines - noch unbearbeiteten - Wachsrohlings händisch geformt. Der Wachsrohling kann sich durch eine dem Gebissabdruck angepasste Größe auszeichnen, wobei der Wachsrohling noch aufwändig bearbeitet und individuell an das Gebiss des Patienten angepasst wird. Es ist jedoch auch möglich, einen bereits geformten - für die bei dem Abdruck vorliegenden Verhältnisse zumindest in etwa geeigneten - Wachsrohling auszuwählen, welcher nur geringfügig oder gar nicht modifiziert werden muss. Das fertige Modell des Dentalbauteils wird anschließend händisch auf einem Grundkörper, einer sogenannten Säule, positioniert, um einen sog. Aufbau zu erzeugen. Die Säule besteht aus einem Material, welches zumindest hinsichtlich des Schmelzverhaltens ähnliche Eigenschaften wie das Material des Modells aufweist. Das Modell wird mitsamt der Säule in einer Einbettmasse eingebettet. Sobald die Einbettmasse ausgehärtet ist, werden das Modell und die Säule aus der Einbettmasse ausgebrannt. Hierfür wird die ausgehärtete Einbettmasse derart in einem Brennofen positioniert, dass das geschmolzene Modellmaterial aus der Einbettmasse herausfließen kann. Das Ergebnis des Prozesses ist eine Negativform des Modells und der Säule - also des Aufbaus - in der Einbettmasse.

Die Negativform wird anschließend mit einem Rohmaterial befüllt, aus dem das Dentalbauteil bestehen soll. Das Rohmaterial liegt beispielsweise in Pellet-Form vor. Es wird in den durch die Säule gebildeten Kanal der Negativform eingebracht. Das Rohmaterial wird durch ein geeignetes Verfahren und mit einer entsprechenden Vorrichtung innerhalb der Negativform aufgeschmolzen und - zumindest zeitweise - mit einer Presskraft beaufschlagt. Nach dem Aushärten des Bauteils muss die Negativform anschließend behutsam und meist sehr aufwendig entfernt werden, um das fertige Dentalbauteil unbeschädigt freizulegen.

Die Anfertigung des Dentalbauteils ist somit mit einem sehr hohen Arbeitsaufwand verbunden. Zusätzlich können durch die Vielzahl an benötigten Einzelschritten zur Fertigung des Dentalbauteils an vielen Stellen Fehler entstehen und Fehler fortgetragen werden.

Die US 2014/0377718 A1 offenbart ein Verfahren zur Anfertigung eines Dentalbauteils aus einem Fräsblock. Aus diesem wird durch geeignete Abtragungsverfahren das Bauteil ausgeformt. Ein ähnliches Verfahren ist in der WO 02/09612 A1 beschrieben.

Die US 2002/0125619 A1 beschreibt, aus einem Grünkörper zunächst eine Innenkontur und Teile einer Außenkontur eines Dentalbauteils zu fräsen. Anschließend wird der freigelegte Teil des Bauteils in ein gießfähiges Material eingebettet, um das halbfertige Dentalbauteil zu fixieren. Anschließend werden das Dentalbauteil freigestellt und die gießfähige Masse entfernt. Ähnlich wie bei dem in den vorstehend genannten Druckschriften beschriebenen Verfahren liegt auch hier keine Negativform vor, die die Struktur des zu formenden Dentalbauteils definiert.

Die DE 10 2016 225208 A1 offenbart ein Verfahren zur Herstellung eines Dentalbauteils unter Fertigung eines Modells und Einbettung des Modells in eine Einbettmasse zur Herstellung einer Gießform. Die EP 2 082 703 A2 offenbart eine Ausbettvorrichtung und ein Verfahren zur Ausbettung.

Es ist eine Aufgabe der vorliegenden Erfindung, ein Verfahren zur Herstellung eines Dentalbauteils sowie entsprechendes System zu schaffen, welches sich durch einen geringeren Arbeitsaufwand auszeichnet. Außerdem sollen die möglichen Fehlerquellen minimiert werden.

Diese Aufgabe wird durch ein Verfahren mit den Merkmalen des Anspruchs 1.

Das Verfahren umfasst folgende Schritte:
(i) Fertigung eines Modells des Dentalbauteils,
(ii) Einbetten des Modells in einer Einbettmasse,
(iii) Entfernen des Modells aus der Einbettmasse, insbesondere durch Erhitzen oder Ausbrennen, um eine Negativform des Modells zu erhalten,
(iv) Einbringen eines zur Herstellung des Dentalbauteils erforderlichen Rohmaterials in die Negativform,
(v) Erzeugen des Dentalbauteils in der Negativform,
(vi) zumindest teilweise automatisiertes Ausbetten des Dentalbauteils auf Basis eines virtuellen Modells des Dentalbauteils.

Das erfindungsgemäße Verfahren zeichnet sich also dadurch aus, dass ein virtuelles Modell des Dentalbauteils erstellt wird und das Dentalbauteil auf Basis dieses virtuellen Modells zumindest teilweise automatisiert ausgebettet wird. Teilweise automatisiert bedeutet hierbei, dass auch eine Kombination mit einem manuellen Ausbettverfahren in Frage kommen kann.

Zur Herstellung eines Dentalbauteils wird - wie bereits erwähnt - ein Modell benötigt, auf Basis dessen eine Negativform des gewünschten Dentalbauteils erstellt wird. Beispielsweise wird das Modell aus einem wachsähnlichen Rohling gefertigt.

Je nach Fertigungsart kann das virtuelle Modell des Dentalbauteils vor, während oder nach der Fertigung des Modells erstellt werden. Wird das virtuelle Modell nach der Fertigung des Modells erstellt, so kann insbesondere das gefertigte Modell gescannt werden, um ein virtuelles Modell zu erhalten.

Das gefertigte Modell wird in einer Einbettmasse eingebettet. Zum Einbetten stehen einige bereits bekannte Verfahren zur Auswahl.

Um eine Negativform des Modells zu erhalten, wird das Modell aus der Einbettmasse entfernt. Vorzugsweise werden das Modell und der Grundkörper durch eine erhöhte Temperatur aufgeschmolzen oder ausgebrannt.

Anschließend wird das Rohmaterial zur Erzeugung des Dentalbauteils in die Negativform eingebracht

Das Dentalbauteil wird in der Negativform erzeugt. Nach dem Aushärten des Rohmaterials nach dem Brennvorgang liegt das gefertigte Dentalbauteil in der Negativform vor.

Erfindungsgemäß werden anschließend die Daten des virtuellen Modells genutzt, um die Lage des Dentalbauteils in der Negativform zu bestimmen und auf Basis der ermittelten Position das Dentalbauteil auszubetten. Zusätzlich kann durch das virtuelle Modell das Volumen und/oder die Geometrie des Dentalbauteils und/oder andere charakteristische Parameter des Dentalbauteils, bei dem Ausbettverfahren berücksichtigt werden, um das Dentalbauteil während dem Ausbetten nicht zu beschädigen. Auch die Art und/oder die Eigenschaften des Einbettmaterials kann dabei berücksichtigt werden

Um das Ausbetten zu beschleunigen, kann ein ganzes Segment (oder mehrere Segmente) der Einbettmasse abgeschnitten werden, wenn aufgrund des virtuellen Modells bekannt ist, dass sich das Dentalbauteil nicht in dem Segment befindet.

Es ist ebenfalls vorstellbar, dass ein Teil der Einbettmasse manuell abgetragen wird. Hierbei ist es besonders bevorzugt, wenn der Teil der Einbettmasse entfernt wird, der am weitesten von dem erzeugten Dentalbauteil entfernt ist. Nach dem manuellen Entfernen eines Teils der Einbettmasse, wird die restliche Einbettmasse automatisiert abgetragen. Es ist selbstverständlich, dass das manuelle und das automatisierte Abtragen auch vertauscht werden kann, so dass zuerst der vom erzeugten Dentalbauteil entfernte Teil der Einbettmasse automatisiert entfernt wird und anschließend das Dentalbauteil manuell ausgebettet wird.

Das freigelegte Dentalbauteil kann bereits einsatzfertig sein oder weiter bearbeitet werden.

Vorteilhafte Ausführungsformen der Erfindung sind auch in den Ansprüchen, der nachfolgenden Beschreibung sowie den Figuren angegeben.

Es kann vorgesehen sein, dass das virtuelle Modell auf einem 3D-Scan des Modells und/oder einer Tomografie der Negativform basiert und/oder dass das virtuelle Modell auf einem digitalen Modell des Dentalbauteils basiert, dass mit Hilfe von virtuellen Daten eines Gebisses eines Patienten oder eines Teiles davon erzeugt wurde.

Des Weiteren kann vorgesehen sein, dass die virtuellen Daten eines Gebisses eines Patienten oder eines Teiles davon auf Basis eines interoralen Scans und/oder eines Scans eines Negativabdrucks eines Gebisses eines Patienten oder eines Teiles davon erzeugt werden. Die virtuellen Daten können auch durch Scannen eines auf Basis des Negativabdrucks erzeugten physischen Modells erzeugt werden.

Erfindungsgemäß ist eine Ausbetteinrichtung zum Ausbetten des Dentalbauteils vorgesehen, die eine Steuereinheit umfasst, die die Ausbetteinrichtung auf Basis des virtuellen Modells steuert.

Durch die Steuereinheit kann das Ausbetten des Dentalbauteils gesteuert werden. Da das Ausbetten zumindest teilautomatisch abläuft, kann einem Bediener der Ausbetteinrichtung über die Steuereinheit beispielsweise zusätzlich ausgegeben werden, wann der automatisierte Teil fertig ist und wann ein manuelles Eingreifen benötigt wird. Auch ein teilweise manuelles Ausbetten kann durch die Steuereinheit gesteuert und/oder überwacht werden.

Gemäß einer weiteren Ausgestaltung wird ein Soll-Ist-Abgleich mittels des virtuellen Modells und Daten einer Tomografie der Negativform (mit dem Bauteil darin) vorgenommen und das automatisierte Ausbetten auf Basis des Soll-Ist-Abgleichs angepasst.

Durch den Soll-Ist-Abgleich kann vermieden werden, dass das Dentalbauteil während dem automatisierten Ausbetten beschädigt wird. Es kann beispielsweise die Entfernung des Dentalbauteils zu einer Abtrageposition des Ausbettverfahrens überprüft werden. Anschließend kann beispielsweise die Abtragegeschwindigkeit des Ausbettverfahrens auf Basis des ermittelten Soll-Ist-Vergleichs angepasst werden. Durch die Überprüfung mittels Tomografie oder Vermessung oder Scannen können zudem frühzeitig Fehler, wie beispielsweise eine falsche Positionierung in der Einbettmasse, detektiert werden und das Ausbettverfahren darauf abgestimmt werden.

Es kann vorgesehen sein, dass das zumindest teilweise automatisierte Ausbetten mittels eines abtragenden Fertigungsverfahrens erfolgt. Dieses kann ein Druckluftstrahlen mit einem Strahlmittel und/oder ein Wasserstrahlen und/oder ein Fräsen umfasst.

Gemäß eine weiteren Ausführungsform ist eine Abtragrate bzw. eine Geschwindigkeit des Ausbettens anpassbar, insbesondere automatisch in Abhängigkeit eines Fortschritts des Ausbettens.

Das automatisierte Ausbetten kann insbesondere derart ausgestaltet sein, dass die Abtragrate bzw. die Abtragegeschwindigkeit an die Position des erzeugten Dentalbauteils innerhalb der Einbettmasse angepasst ist.

Des Weiteren kann vorgesehen sein, dass die Negativform in der Nähe des Dentalbauteils mit einer niedrigeren Abtragrate bzw. Geschwindigkeit abgetragen wird als in größerer Entfernung des Dentalbauteils.

Hierdurch wird ein schonendes und dennoch effizientes Ausbetten des Dentalbauteils ermöglicht.

Bevorzugt weist die Negativform zumindest ein Mittel zur - virtuellen - Festlegung eines Modellkoordinatensystems relativ zu einem Koordinatensystem der Aus-betteinrichtung auf, mittels dem die Position und/oder Ausrichtung des Dentalbauteils in der Negativform in Bezug auf die Ausbetteinrichtung bestimmbar ist, und/oder dass die Negativform und/oder die Ausbetteinrichtung zumindest ein Ausrichtmittel, insbesondere zumindest eine optische Markierung und/oder eine mechanische Codierung aufweisen, mittels dem eine genaue Ausrichtung der Negativform in der Ausbetteinrichtung festlegbar ist. Gleichermaßen kann das Modell beim Einbetten in wohldefinierter Form fixiert sein, sodass dessen Lage und Ausrichtung in dem durch das Einbetten geformten Körper bekannt ist.

Auf Grund der Möglichkeit einer genauen Ausrichtung der Negativform, kann diese problemlos nach den einzelnen Schritten des Verfahrens bewegt werden, ohne dass dies Auslöser für ein fehlerhaftes Ausbetten sein könnte. Das Verfahren wird dadurch nicht nur vereinfacht, die Handhabung der Negativform ist zudem deutlich flexibler, wodurch das Verfahren beschleunigt werden kann, ohne dass dies negative Folgen auf die Ausbettqualität hat.

Gemäß einer weiteren Ausgestaltung wird das Modell des Dentalbauteils mittels additiver Fertigung, insbesondere mittels 3D-Druck, hergestellt.

Durch die additive Fertigung kann der Prozess weiter automatisiert werden. Ein menschlicher Fehler bei der Bearbeitung des Modells wird hierdurch verringert. Zudem können mit Hilfe der additiven Fertigung auf reproduzierbare Weise Feinheiten in der Struktur des Dentalbauteils erzeugt werden, was bei einer händischen Anfertigung des Modells nur bedingt möglich ist.

Zusätzlich können durch die Fertigung des Modells mittels additiver Fertigung, beziehungsweise 3D-Druck, erhebliche Kosten eingespart werden, da zum einen keine Lager- bzw. Vorhaltekosten für Modellrohlinge anfallen, zum anderen können Materialkosten eingespart werden, da die additive Fertigung - wie der Name schon sagt - ein aufbauendes Verfahren ist und daher nicht wie bei einer Nachbearbeitung eines Modellrohlings überschüssiges Material mittels eines abtragenden Verfahren abgetragen und entsorgt werden muss.

Bevorzugt wird das Modell des Dentalbauteils auf Basis des virtuellen Modells erzeugt.

Ein beispielhaftes System zur Herstellung eines Dentalbauteils, insbesondere eines Zahnersatzes oder eines -teilersatzes umfasst eine Ausbetteinrichtung zum zumindest teilweise automatisierten Entfernen des Dentalbauteils aus einer Negativform auf Basis eines virtuellen Modells und eine Steuerungseinrichtung, wobei die Ausbetteinrichtung mit der Steuerungseinrichtung verbindbar oder verbunden ist, um Steuerdaten von der Steuerungseinrichtung zu empfangen, insbesondere wobei die Ausbetteinrichtung mittels eines abtragenden Fertigungsverfahrens arbeitet, wie etwa Luftdruckstrahlen und/oder Wasserstrahlen und/oder Fräsen.

Wird beispielsweise Luftdruckstrahlen zum Abtragen der Einbettmasse eingesetzt, so kann die Ausbetteinrichtung mindestens eine Düse umfassen, mit der ein verwendetes Strahlmittel auf die Negativform bzw. auf die abzutragende Einbettmasse aufgebracht wird. Das Strahlmittel wird mit Hilfe der Düse derart beschleunigt, dass es die Einbettmasse beim Aufprallen abtragen kann. Das abtragende Fertigungsverfahren ist zumindest teilweise automatisiert, mit Hilfe der Steuereinheit kann die Ausbetteinrichtung beispielsweise ein Ausbettprogramm abarbeiten.

Die Ausbetteinrichtung kann auch ein trennendes Verfahren umfassen, mit Hilfe dessen das Dentalbauteil ausgebettet wird. Auch eine Kombination von abtragenden und trennenden Fertigungsverfahren kann vorgesehen werden, wodurch die Negativform in einem ersten Schritt beispielsweise segmentweise abgetrennt wird. Anschließend wird der Rest der Negativform, welcher das Dentalbauteil umfasst, mit dem abtragenden Fertigungsverfahren abgetragen und das Dentalbauteil sorgfältig ausgebettet.

Gemäß einer möglichen Ausgestaltung des Systems umfasst das System zusätzlich einen programmierbaren Dentalbrennofen, wobei der programmierbare Dentalbrennofen mit der Steuerungseinrichtung verbindbar oder verbunden ist, insbesondere wobei die Steuerungseinrichtung dazu ausgebildet und eingerichtet ist, um auf Basis des virtuellen Modells des Dentalbauteils automatisch ein Programm zum Betrieb des Dentalbrennofens zu wählen und/oder automatisch ein solches Programm zu erstellen und/oder automatisch ein solches Programm vorzuschlagen, insbesondere wobei die Steuerungseinrichtung zur direkten oder indirekten Steuerung des Dentalbrennofens ausgebildet und eingerichtet ist.

Auf Basis des virtuellen Modells wird automatisch - also ohne Zutun eines Bedienpersonals - ein Programm erstellt oder gewählt, das den Betrieb des Brennofens steuert und/oder regelt. Das Programm kann unmittelbar zum Einsatz gelangen oder es wird dem Bedienpersonal vorgeschlagen, das die Verwendung des Programms autorisieren muss. Es ist auch vorstellbar, dass das vorgeschlagene Programm von dem Bedienpersonal modifiziert werden kann, bevor es gestartet wird.

Da das virtuelle Modell bekannt ist, können das Volumen und/oder die Geometrie des Dentalbauteils und/oder andere charakteristische Parameter des Dentalbauteils, bei der Wahl oder Erstellung des den Brennofen steuernden/regelnden Programms berücksichtigt werden, um optimale Brennergebnisse sicherzustellen und gleichzeitig auch ökonomischen Gesichtspunkten Rechnung zu tragen. Die Daten des virtuellen Modells werden genutzt, um ein geeignetes Programm aus einer in dem Brennofen oder einer in einer externen Datenbank hinterlegten Programmbibliothek zu wählen. Es ist ebenfalls möglich, dass ein einer Bibliothek entnommenes Programm unter Berücksichtigung des virtuellen Modells angepasst oder modifiziert wird oder dass auf Basis des virtuellen Modells ein individuelles Programm geschaffen wird. Bei der Wahl/Generierung des Programms können die Art und/oder Eigenschaften des Rohmaterials, das zu Erzeugung des Bauteils verwendet wird, berücksichtigt werden. Insbesondere sind entsprechende Informationen in das virtuelle Modell integriert.

Bevorzugt weist der Dentalbrennofen eine Presseinrichtung auf, mittels der das Rohmaterial unter Aufbringen einer Presskraft in die Negativform einbringbar ist und/oder mittels derer das Dentalbauteil unter Presskraftbeaufschlagung erzeugbar ist. Grundsätzlich können der gesamte Brennvorgang oder zumindest Teile davon unter Presskraftbeaufschlagung erfolgen.

Gemäß einer möglichen Ausgestaltung des Systems umfasst das System zusätzlich eine Rohdatenerfassungseinrichtung, insbesondere einen optischen Scanner, zum intraoralen Scannen eines Gebisses eines Patienten oder eines Teils davon und/oder zum Scannen eines Negativabdrucks eines Gebisses eines Patienten oder eines Teils davon und/oder zum Scannen eines Modells des Dentalbauteils.

Gemäß einer weiteren beispielhaften Variante des Systems ist die Steuerungseinrichtung dazu ausgebildet und eingerichtet, das virtuelle Modell zu empfangen und/oder das virtuelle Modell auf Basis von Daten zumindest eines Scans zu erstellen.

Bevorzugt umfasst das System zusätzlich eine Modellherstellungsvorrichtung zur additiven Fertigung des Modells auf Basis des virtuellen Modells, insbesondere wobei die Modellherstellungsvorrichtung mit der Steuerungseinrichtung verbindbar oder verbunden ist, um Steuerdaten von der Steuerungseinrichtung zu empfangen. Alternativ können die Steuerdaten auch in der Modellherstellungsvorrichtung auf Basis der Daten des virtuellen Modells generiert werden.

Gemäß einer weiteren beispielhaften Variante des Systems umfasst das System zusätzlich einen programmierbaren Ofen zum Entfernen des Models aus der Einbettmasse, wobei der Ofen mit der Steuerungseinrichtung verbindbar oder verbunden ist, um Steuerdaten von der Steuerungseinrichtung zu empfangen, insbesondere wobei die Steuerungseinrichtung dazu ausgebildet und eingerichtet ist, auf Basis eines virtuellen Modells des Dentalbauteils automatisch zumindest einen Prozessparameter zum Betrieb des Ofens zu wählen und/oder automatisch einen solchen Prozessparameter zu erstellen und/oder automatisch einen solchen Prozessparameter vorzuschlagen.

Gemäß noch einer weiteren beispielhaften Variante weist die Scan-Vorrichtung und/oder die Modellherstellungsvorrichtung und/oder der programmierbare Ofen und/oder der Dentalbrennofen und/oder die Ausbetteinrichtung eine von der Steuerungseinrichtung separate Steuereinheit auf, die mit der Steuerungseinrichtung verbindbar und/oder verbunden ist, insbesondere wobei die Steuerungseinrichtung eine übergeordnete Steuerung bereitstellt.

Nachfolgend werden das erfindungsmäßige Verfahren und das System rein beispielhaft anhand einer vorteilhaften Ausführungsform unter Bezugnahme auf die beigefügten Figuren beschrieben. Es zeigen:
- Fig. 1: ein intraorales Scannen eines Gebisses eines Patienten;
- Fig. 2: ein Erstellen eines auf das Gebiss des Patienten angepassten virtuellen Modells eines Dentalbauteils mit Hilfe eines computerbasierten Programms;
- Fig. 3: eine Positionierung virtueller Grundkörper mit Hilfe des Programms;
- Fig. 4: eine Positionierung der virtuellen Modelle auf den virtuellen Grundkörpern mit Hilfe des Programms;
- Fig. 5: eine Erzeugung eines virtuellen Aufbaus auf Basis der virtuellen Modelle mit Hilfe des Programms;
- Fig. 6: einen physischer Aufbau, der auf Basis des virtuellen Aufbaus erzeugt wurde;
- Fig. 7: ein Einbetten des physischen Aufbaus in eine Einbettmasse zur Erzeugung eines Einbettkörpers;
- Fig. 8: ein Ausbrennen des physischen Aufbaus aus dem Einbettkörper zur Erzeugung einer Negativform;
- Fig. 9: ein Einbringen eines zur Erzeugung der Dentalbauteile erforderlichen Rohmaterials und von Pressstempeln in die Negativform;
- Fig. 10: ein Ausbetten des Dentalbauteils mit Hilfe einer Ausbetteinrichtung und
- Fig. 11: ein Beispiel eines entsprechenden Systems.

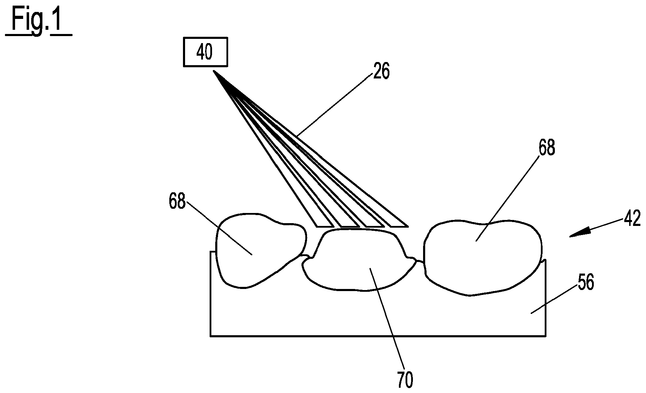

Die Fig. 1 bis 10 zeigen die einzelnen Schritte einer Ausführungsform des erfindungsgemäßen Verfahrens.

In Fig. 1 ist ein erster Schritt des erfindungsgemäßen Verfahrens schematisch dargestellt. Ein Teil eines Gebisses 42 eines Patienten wird mit Hilfe einer Scan-Vorrichtung 40 intraoral gescannt (angedeutet mit dem Bezugszeichen 26). Der Teil des Gebisses 42 weist das Zahnfleisch 56 des Gebisses, zwei mangelfreie Zähne 68 und einen einen Zahnteilersatz benötigenden mangelhaften Zahn 70 auf. Grundsätzlich ist es auch denkbar, dass ein (negativer) Abdruck des Gebisses 42 angefertigt wird. Dieser Abdruck kann dann gescannt werden. Es ist aber auch möglich, mithilfe des Abdrucks ein (positives) physisches Modell des Gebisses 42 zu fertigen, das dann gescannt wird.

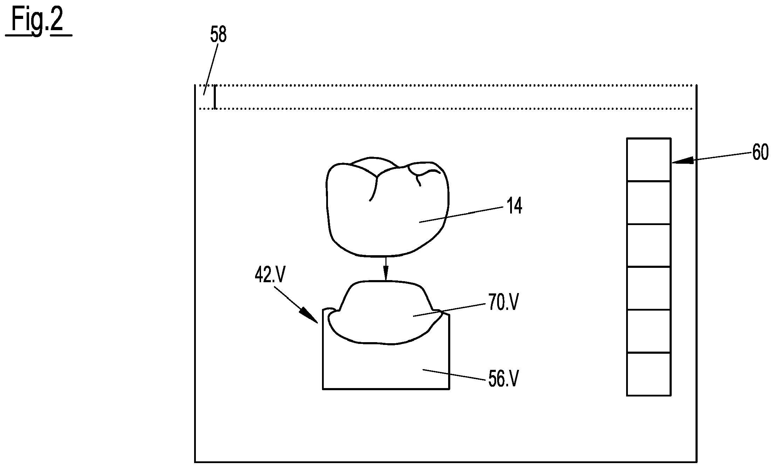

Die Scan-Daten bilden die Grundlage für ein virtuelles Modells 42.V des gescannten Teils des Gebisses 42 (siehe Fig. 2).

Die Fig. 2 bis Fig. 5 zeigen eine grafische Benutzeroberfläche 58 eines computerbasierten Programms zur virtuellen Bearbeitung des virtuellen Modells 42.V, wobei die grafische Benutzeroberfläche 58 eine Symbolleiste 60 aufweist, mit Hilfe derer verschiedene Werkzeuge zur Erstellung und Bearbeitung eines virtuellen Modells 14 eines zur Rekonstruktion des mangelhaften Zahns 70 vorgesehenen Dentalbauteils ausgewählt werden können.

In Fig. 2 ist das virtuelle Modell 14 dieses Zahnteilersatzes dargestellt, welches an das vorher erstellte virtuelle Gebiss 42.V angepasst ist. Das virtuelle Gebiss 42.V umfasst ein virtuelles Zahnfleisch 56.V und einen virtuellen, mangelhaften Zahn 70.V. Das virtuelle Gebiss 42.V basiert beispielsweise auf dem zuvor durchgeführten intraoralen Scan 26. Mit Hilfe des computerbasierten Programms kann das virtuelle Modell 14 derart für den mangelhaften Zahn 70 angepasst werden, dass das Gebiss 42 des Patienten mit einem auf dem virtuellen Modell 14 basierten Dentalbauteil 10 instand gebracht werden kann. Das virtuelle Modell 14 kann beispielsweise automatisch oder manuell einer Datenbank mit einer Vielzahl von Standardmodellen entnommen werden. Bei Bedarf kann das gewählte Standardmodell an die jeweils vorliegende Situation angepasst werden, um eine aus zahntechnischer Sicht optimiertes virtuelles Modell 14 zu schaffen. Mit anderen Worten: Die Anpassung kann automatisch, semi-automatisch (z.B. manuelle Anpassung eines Grundmodells oder Standardmodells) oder manuell erfolgen.

Grundsätzlich kann nun mit der Erstellung eines physischen Modells des virtuellen Modells 14 begonnen werden. Häufig werden jedoch gleich mehrere physische Modelle zur gleichzeitigen Herstellung mehrerer Dentalbauteile für verschiedene Patienten erzeugt, um Kosten zu sparen.

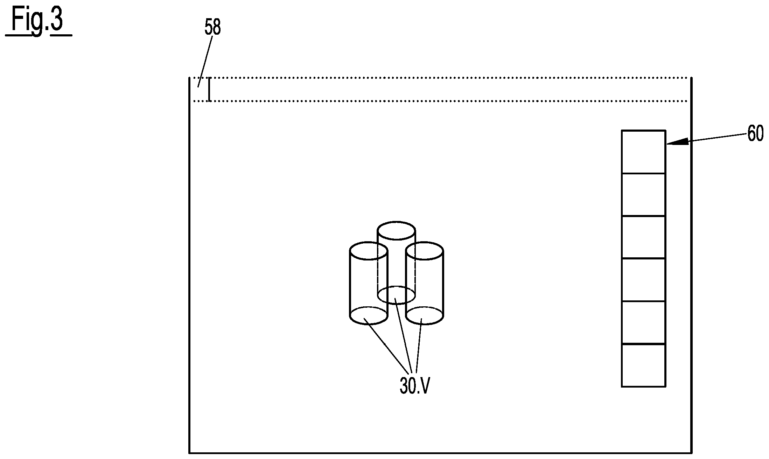

Für das nachfolgend noch beschriebene Einbetten des physischen Modells ist es vorteilhaft, wenn es auf einer Art Sockel oder einem Grundkörper angeordnet ist. Auch dies lässt sich mit Hilfe des Programms planen. Das Programm kann z.B. automatisch ermitteln, wie mehrere physische Modelle möglichst vorteilhaft räumlich angeordnet werden, um mit einem Verfahrensdurchlauf möglichst viele Dentalbauteile gleichzeitig herstellen zu können (diese Planung kann auch manuell oder manuell unterstützt erfolgen). Dazu sind unter Umständen mehrere Grundkörper erforderlich. Im vorliegenden Beispiel schlägt das Programm eine Anordnung von drei Grundkörpern (virtuelle Grundkörper 30.V) vor (siehe Fig. 3). Die Anordnung der Grundkörper 30.V kann auch durch apparative Rahmenbedingungen vorgegeben sein, z.B. durch eine Konfiguration des Brennofens und/oder eine Ausgestaltung einer Pressvorrichtung des Ofens. Die virtuellen Grundkörper 30.V können durch virtuelle Stege (nicht gezeigt) miteinander verbunden sein.

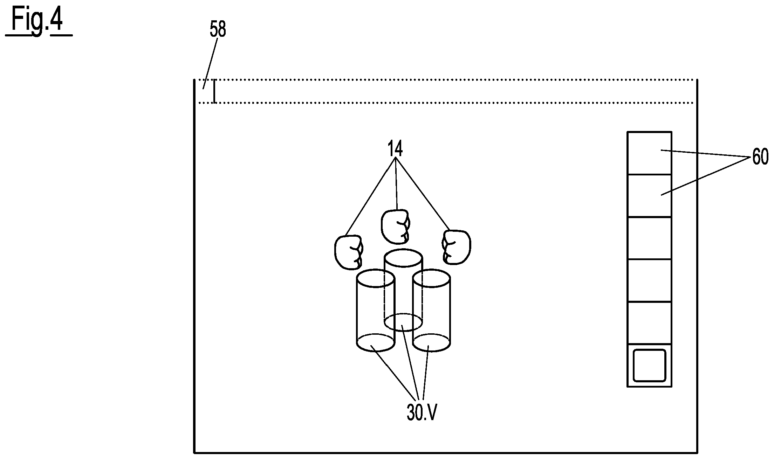

In dem in Fig. 4 gezeigten nächsten Schritt werden drei virtuelle Modelle 14 derart über den drei virtuellen Grundkörpern 30.V angeordnet, dass die virtuellen Modelle zwar nah bei den virtuellen Grundkörpern 30.V liegen, es jedoch noch keinerlei Berührungspunkte gibt.

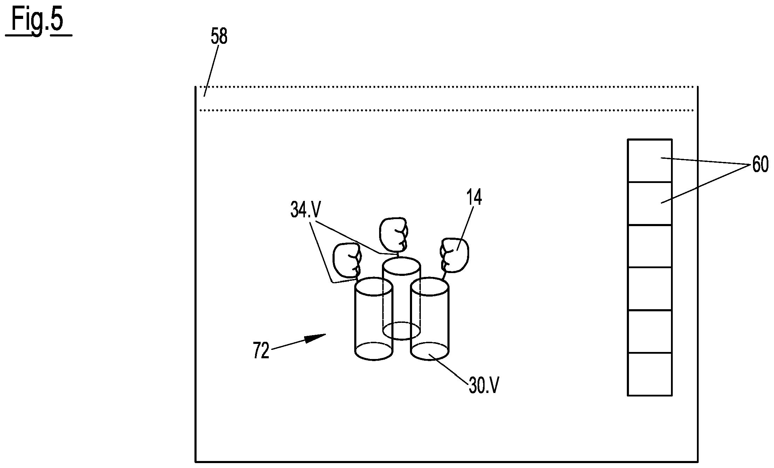

Fig. 5 stellt einen Planungsschritt dar, in welchem zwischen den virtuellen Grundkörpern 30.V und den virtuellen Modellen 14 virtuelle Verbindungsstege 34.V eingefügt werden (automatisch, manuell oder teilmanuell). Die Verbindungstege 34.V verbinden die virtuellen Grundkörper 30.V mit den virtuellen Modellen 14. Damit wurde ein virtueller Aufbau 72 geschaffen, mit dessen Hilfe ein physischer Aufbau erzeugt werden erzeugt werden kann, der die Basis zur Erstellung einer geeigneten Negativform bildet.

Es versteht sich, dass die virtuelle Erzeugung und Bearbeitung des Aufbaus 72 grundsätzlich automatisch erfolgen kann. Bevorzugt besteht jedoch die Möglichkeit, dass ein Bedienpersonal in allen Planungsschritten bedarfsgerecht Anpassungen vornehmen kann.

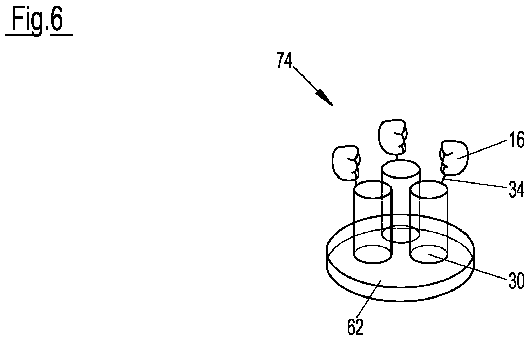

Fig. 6 zeigt einen physischen Aufbau 74 der auf Basis des in den Fig. 2 bis 5 virtuell gestalteten Aufbaus 72 gefertigt wurde. Der Aufbau 74 weist drei physische Modelle 16 auf, die jeweils ein physisches Abbild des entsprechenden virtuellen Modells 14 sind und die jeweils über zumindest einen Verbindungssteg 34 mit jeweils zumindest einem Grundkörper 30 verbunden sind. Grundsätzlich können auch Verbindungsstege zwischen den Modellen 16 und den Grundkörpern 30 vorgesehen sein. Diese können nachträglich manuell eingefügt werden oder schon bei der virtuellen Planung berücksichtigt werden.

Der Aufbau 74 kann auf Basis des zuvor erstellten virtuellen Aufbaus 72 mittels eines additiven Fertigungsverfahrens hergestellt werden, insbesondere mittels 3D-Druck. Es ist jedoch auch möglich, den Aufbau 74 oder einzelne Teile davon auf eine andere Weise - insbesondere durch ein abtragendes Verfahren, beispielsweise mittels Fräsen - zu fertigen und/oder den Aufbau 74 nachzubearbeiten, insbesondere manuell.

Bei einer Fertigung des Aufbaus 74 mittels 3D-Druck, ist es vorteilhaft, wenn alle drei Grundbestandteile - Modelle 16, Grundkörper 30 und Verbindungsstege 34 - aus demselben Modellmaterial (z.B. ein wachsartiges Material und/oder Kunststoff) gefertigt sind. Wurden die drei Bestandteile nur teilweise gemeinsam oder gar in einzelnen Schritten mit unterschiedlichen Methoden gefertigt, so weisen die drei Bestandteile vorzugsweise ebenfalls das gleiche oder zumindest ein ähnliches Material auf. Vorzugsweise weisen die verwendeten Materialien ein ähnliches Schmelzverhalten auf. Insbesondere ist das Modellmaterial rückstandlos verbrennbar. Vorzugsweise weist das Material einen Schmelz-, Siede- bzw. Sublimationspunkt in einem Bereich von oberhalb der Raumtemperatur bis 900°C auf.

Ein besonders geeignetes 3D-Druckverfahren ist beispielsweise die Stereolithographie, bei der ein lichtaushärtender Kunststoff zum Einsatz gelangt.

Der gefertigte Aufbau 74 wird in einer wohldefinierten Position und Ausrichtung auf einer Grundplatte 62 positioniert und vorzugsweise dort fixiert. Er kann auch direkt auf der Grundplatte 62 hergestellt (z.B. gedruckt) werden.

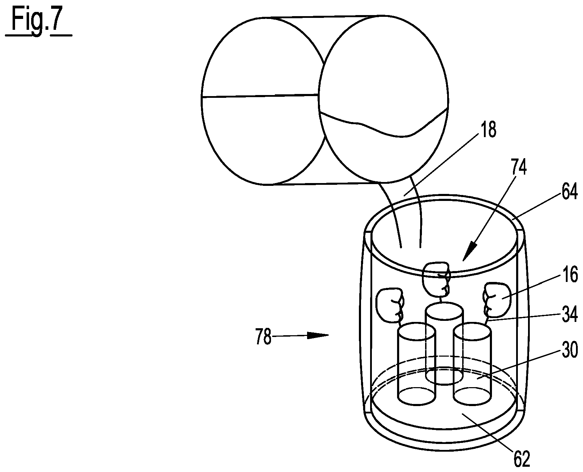

Wie in Fig. 7 gezeigt ist, wird auf die Grundplatte 62 eine Manschette 64 aufgesetzt, so dass sie den Aufbau 74 umgibt und beispielsweise mittels einer Steckverbindung an der Platte 62 befestigt ist. Die Manschette 64 bildet mit der Grundplatte 62 einen becherartigen Zylinder 78, der einseitig offen ist. In den Innenraum des Zylinders 78 wird nun eine geeignete Einbettmasse 18 eingebracht. Die Einbettmasse 18 kann ein gipsartiges Material sein und/oder phosphatgebunden und/oder ethylsilikatgebunden sein.

Nach dem Aushärten der Einbettmasse 18 werden die Manschette 64 und die Grundplatte 62 entfernt. Dies kann insbesondere dadurch begünstigt werden, dass die Innenseiten der Manschette 64 und der Grundplatte 62 vor dem Zusammensetzen mit einem Trennmittel benetzt werden und/oder eine entsprechende Oberflächenbeschichtung aufweisen.

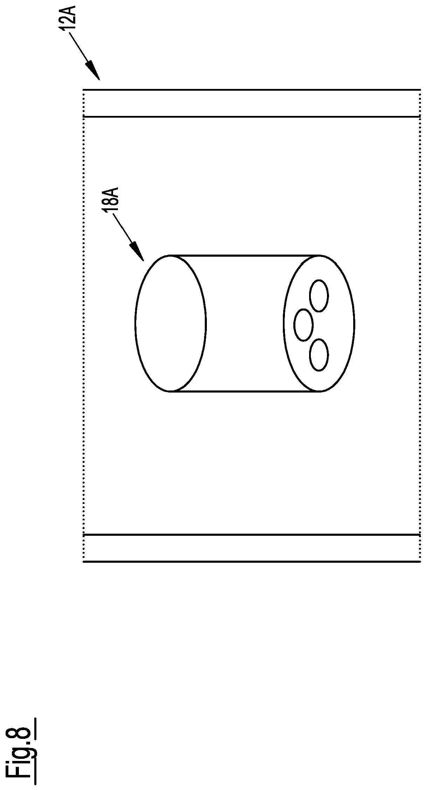

Fig. 8 zeigt einen weiteren Schritt bei der Fertigung eines Dentalbauteils. Die ausgehärtete Einbettmasse 18 bildet einen Einbettkörper 18A, der nun in einen programmierbaren Ausbrennofen 12A eingebracht wird. Der Einbettkörper 18A wird derart positioniert, dass die von der Grundplatte 62 gebildete Stirnseite 84 der zylinderförmigen, ausgehärteten Einbettmasse 18 nach unten zeigt.

Die Prozessparameter zum Betrieb des Ausbrennofens 12A können automatisch, manuell oder teilmanuell auf Basis des virtuellen Modells 14, der virtuellen Bestandteile 30.V, 34.V (siehe Fig. 2 bis 5) und/oder des gesamten virtuellen Aufbaus 72 gewählt werden. Ziel ist es, dass die Modelle 16, die Verbindungsstege 34 und die Grundkörper 30 durch Ausbrennen aus der ausgehärteten Einbettmasse 18 möglich effizient und vollständig entfernt werden. Zu diesem Zweck werden geeignete Prozessparameter, wie eine Maximaltemperatur, ein Temperaturverlauf und/oder eine Brenndauer gewählt, um das Material der vorstehend genannten Komponenten aufzuschmelzen und/oder rückstandslos abzubrennen, ohne den Einbettkörper zu schädigen. Das aufgeschmolzene Material bzw. die Verbrennungsprodukte des Materials kann/können aus dem Körper 18A ausfließen bzw. entweichen.

Die genannten Prozessparameter können selbstverständlich auch einer Datenbank entnommen werden oder auf Erfahrungswerten basieren.

Aus dem Prozess des Ausbrennens der Modelle 16, der Verbindungsstege 34 und der Grundkörper 30 aus dem Einbettkörper 18A resultiert eine Negativform 20 der Modelle 16, der Verbindungsstege 34 und der Grundkörper 30. Die Negativform 20 weist somit Kanäle 32 auf, welche negative Abdrücke der Grundkörper 30 sind.

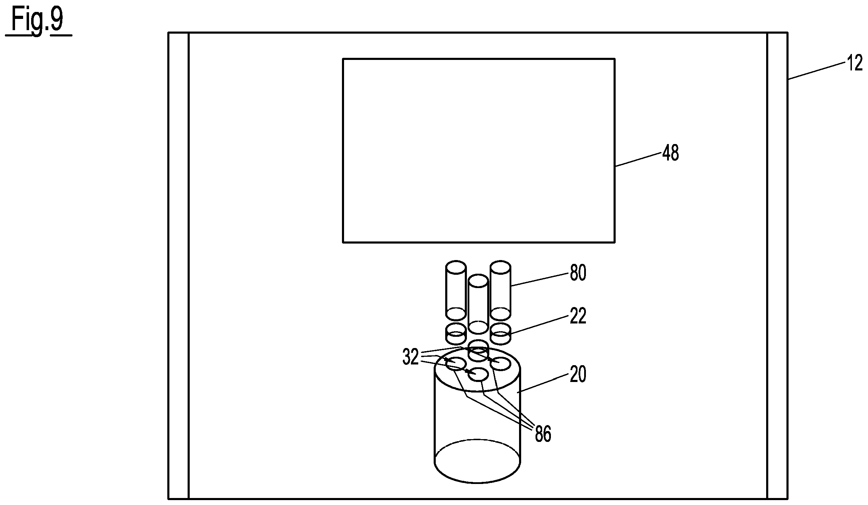

In Fig. 9 ist schematisch gezeigt, wie in die Kanäle 32 der Negativform 20 Pellets 22 eines Rohmaterials eingebracht wird. Es wird bevorzugt dermaßen portioniert, dass es der für das jeweilige Dentalbauteil 10 benötigten Menge entspricht. Die benötigte Menge kann beispielsweise aus dem virtuellen Modell 14 ermittelt werden. Das Rohmaterial kann auch als Pulver, Granulat oder in anderer Form eingebracht werden. Es wird in einem Dentalofen 12 aufgeschmolzen und unter Presskraftbeaufschlagung über die negative Abdrücke der Verbindungsstege 34 (=Verbindungskanäle) in die negativen Abdrücke der Modelle 16 gedrückt, um ein vollständiges und porenfreies Ausfüllen der Abdrücke der Modelle 16 zu gewährleisten. Verbindungskanäle zwischen den Modellen 16 und/oder den Kanälen 32 erleichtern den Austausch von geschmolzenem Rohmaterial innerhalb verschiedener Bereiche der Negativform 20.

Die Presskraft wird von einer den Ofen 12 zugeordneten Presseinrichtung 48 erzeugt und mittels Pressstempel 80 auf das Rohmaterial übertragen. Die Presskraft kann durch eine aktive Bewegung der Stempel 80 und/oder eine Bewegung der Negativform 20 relativ zu den Stempeln 80 erzeugt werden. Die Presskraft kann bis zur vollständigen Aushärtung des erzeugten Dentalbauteils zeitlich konstant oder variabel aufrechterhalten werden. Es ist jedoch ebenfalls möglich, dass die Presskraft beispielsweise nur so lange aufgebracht wird, bis das Rohmaterial 22 vollständig in die Negativform der Modelle 16 eingedrungen ist.

Dem Dentalbrennofen 12 ist eine Steuerungseinrichtung zugeordnet, mit dem sich dieser steuern lässt. Er ist vorzugsweise frei programmierbar. Die Prozessparameter eines Brennprogramms - z.B. Presskraft und Temperatur - werden auf Basis der Eigenschaften des virtuellen Modells 16 und/oder des virtuellen Aufbaus 72 festgelegt. Die Art und/oder die Eigenschaften des verwendeten Rohmaterials können dabei berücksichtigt werden. Es ist z.B. möglich, dass das Bedienpersonal diese Information manuell eingibt und/oder aus einer Datenbank bezieht und sie bei der Planung des virtuellen Modells in dieses integriert. Das virtuelle Modell enthält dann also nicht nur geometrische Informationen, sondern auch Informationen, die das Material charakterisieren. Anhand beispielsweise der Ausgestaltung der zu erzeugenden Dentalbauteile, der benötigten Menge an Rohmaterial 22 und der räumlichen Lage, des Volumens und/oder der Geometrie der negativen Abdrücke der Modelle 16 in der Negativform 20 (auch die Anzahl und Position der Grundkörper 30 kann berücksichtigt werden) kann von der Steuerungseinrichtung automatisch ein Brennprogramm vorgeschlagen werden, welches durch geeignete Prozessparameter, die bei Bedarf auch eine Funktion der Zeit sein können, definiert wird. Beispielsweise wird das Brennprogramm (teilweise) aus geeigneten Parametern der vorhandenen virtuellen Modelle 16 bzw. des virtuellen Aufbaus 72 errechnet oder erzeugt. Es ist auch möglich, dass das Brennprogramm (teilweise) einer Programmbibliothek entnommen wird, wobei bei der Wahl des geeigneten Brennprogramms Parametern der vorhandenen virtuellen Modelle 16 bzw. des virtuellen Aufbaus 72 berücksichtigt werden. Das vorgeschlagene und/oder erzeugte Brennprogramm kann von einem Bedienpersonal bei Bedarf modifiziert werden. Auch eine rein manuelle Festlegung des Brennprogramms ist grundsätzlich denkbar.

Nach dem Aushärten und Abkühlen des Rohmaterials in der Negativform 20 wird die Einbettmasse 18 entfernt. Dies kann manuell erfolgen. Effizienter ist es jedoch, das Ausbetten zumindest teilweise zu automatisieren.

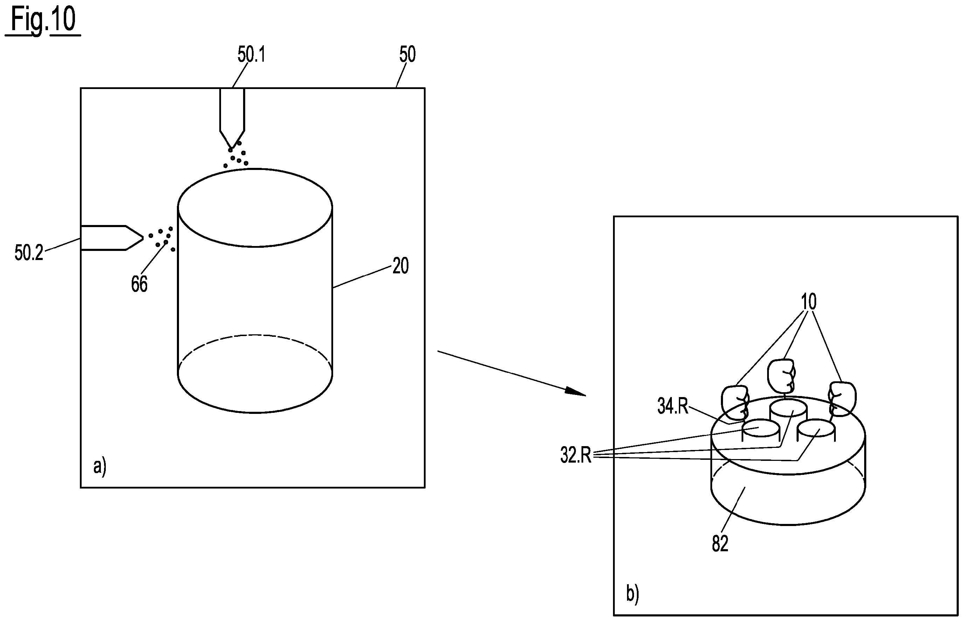

Zu diesem Zweck ist eine Ausbetteinrichtung 50 vorgesehen (siehe Fig. 10a), die die Masse 18 mittels Druckluftstrahlen mit einem festen Strahlmittel (siehe Düsen 50.1, 50.2) oder mittels Wasserstrahlen abträgt. Auch andere abtragende Verfahren, wie etwa Fräsen, und/oder Kombinationen verschiedener Verfahren können zum Einsatz gelangen.

Aufgrund der Daten des virtuellen Aufbaus 72 und durch die wohldefinierte Fixierung des physischen Aufbaus 74 auf der Grundplatte 62 ist die Lage der erzeugten Dentalbauteile in der Form 20 bekannt. Positioniert man nun die Form 20 in bekannter Ausrichtung und Lage in der Ausbetteinrichtung 50, so können die genannten Daten als Grundlage für eine Steuerung der Ausbetteinrichtung 50 dienen. Diese wird so gesteuert, dass die Masse 18 effizient entfernt wird, ohne die Bauteile zu schädigen. Ein Eingriff eines Bedienpersonals bleibt trotzdem möglich, falls es erforderlich sein sollte. Es kann auch vorgesehen sein, dass nur ein grobes Entfernen der Masse 18 automatisiert vorgenommen wird und das endgültige Ausbetten manuell erfolgt. Größere Bereiche des Körpers 18A, in denen keine Bauteile enthalten sind, können auch als ganze Stücke manuell, semiautomatisiert oder automatisiert abgetrennt werden, insbesondere abgeschnitten werden.

Bei dem automatisierten oder semi-automatisierten Ausbetten, können die Art und/oder die Eigenschaften der Einbettmasse 18 berücksichtigt werden. Beispielsweise werden entsprechende Informationen manuell eingegeben oder von einer Datenbank bezogen.

Zur Erleichterung der lagegenauen und reproduzierbaren Positionierung des Aufbaus 74 auf der Grundplatte 62 (oder einer vergleichbaren Basiseinheit) und/oder der Form 20 in der Einrichtung 50 können Markierungen und/oder mechanische Kodierungen vorgesehen sein.

Fig. 10b zeigt das Ergebnis des Ausbettens. Die mittels der Form 20 erzeugten Dentalbauteile 10 sind noch mit dem Rohmaterial (Stege 34.R) verbunden, das in den von den Stegen 34 erzeugten Kanälen ausgehärtet ist und das wiederum mit in den Kanälen 32 ausgehärteten Rohmaterial in Verbindung steht (siehe Bezugszeichen 32.R). Die Komponenten 10, 34.R und 32.R sind ein zumindest teilweises Abbild des physischen Aufbaus 74 (die Grundkörper 30 werden in der Regel nicht vollständig nachgebildet), das in einem Sockel 82 (Rest der Negativform 20) verankert ist. Die Dentalbauteile 10 können nun abgetrennt und bei Bedarf nachbearbeitet werden.

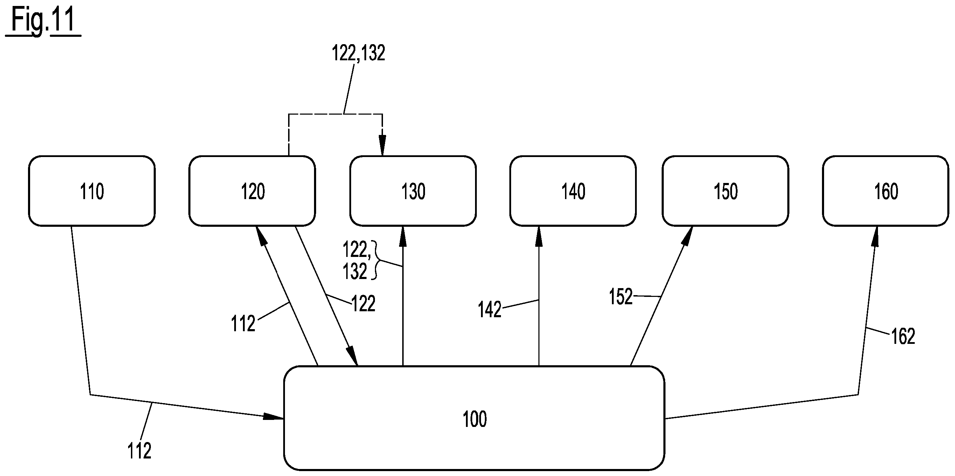

Fig. 11. zeigt ein beispielhaftes System zur Umsetzung des Verfahrens schematisch. Die von einer Rohdatenerfassungseinrichtung 110 (z.B. Scanner 40, siehe Fig. 1) erfassten Rohdaten 112 werden einer Steuerung 100 zugeführt, die eine Steuer- und Regeleinrichtung sein kann. Diese leitet die Rohdaten 112 weiter an ein Modellplanungsmodul 120, das beispielsweise ein Programmmodul ist, das in die Steuerung 100 integriert ist oder das auf einer separaten Rechnereinheit läuft.

Mit Hilfe des Modellerstellungsmoduls 120 wird - automatisch, semi-automatisch oder manuell - auf Basis der Rohdaten 112 ein virtuelles Modell des benötigten Dentalbauteils und/oder eines das Bauteil enthaltenden Aufbaus generiert (siehe z.B. Fig. 2 bis 5). Entsprechende Modelldaten 122 werden über die Steuerung 100 oder direkt (siehe gestrichelter Pfeil) an eine Modellherstellungseinrichtung 130 (z.B. ein 3D-Drucker) übertragen, wo ein physisches Modell oder ein physischer Aufbau des virtuellen Modells bzw. virtuellen Aufbaus erzeugt wird (siehe z.B. Fig. 6). Es ist auch möglich, dass die Modelldaten 122 zunächst in Betriebsparameter 132 und/oder ein entsprechendes Betriebsprogramm für die Einrichtung 130 konvertiert werden. Die Parameter bzw. das Programm 132 können von einem Bedienpersonal an der Einrichtung 130 oder der Steuerung 100 eingegeben werden. Bevorzugt werden die entsprechenden Parameter oder das entsprechende Programm 132 jedoch auf Basis der Modelldaten 122 automatisch erzeugt oder ausgewählt und - falls erforderlich - bei Bedarf von dem Bedienpersonal modifiziert.

Nach dem Einbetten des physischen Modells oder physischen Aufbaus wird der erhaltenen Einbettkörper in einem programmierbaren Ofen 140 (z.B. Ausbrennofen 12A, Fig. 8) ausgebrannt. Die hierfür erforderlich Betriebsparameter 142 und/oder ein entsprechendes Betriebsprogramm können von einem Bedienpersonal an dem Ofen 140 oder der Steuerung 100 eingegeben werden. Bevorzugt werden die entsprechenden Parameter oder das entsprechende Programm 142 jedoch auf Basis der Modelldaten 122 automatisch erzeugt oder ausgewählt (wobei bevorzugt auch die Art und/oder die Eigenschaften des Modellmaterials berücksichtigt werden) und - falls erforderlich - bei Bedarf von dem Bedienpersonal modifiziert.

Der Ausbrennprozess liefert eine Negativform des physischen Modells oder physischen Aufbaus. Die Form wird mit dem Material des Dentalbauteils gefüllt (siehe z.B. Fig. 9) und in einem programmierbaren Dentalofen (z.B. Ofen 12) - optional mit Presseinrichtung - gebrannt. Die hierfür erforderlich Betriebsparameter 152 und/oder ein entsprechendes Betriebsprogramm können von einem Bedienpersonal an dem Ofen 150 oder der Steuerung 100 eingegeben werden. Bevorzugt werden die entsprechenden Parameter oder das entsprechende Programm 152 jedoch auf Basis der Modelldaten 122 automatisch erzeugt oder ausgewählt (wobei bevorzugt auch die Art und/oder die Eigenschaften des Rohmaterials berücksichtigt werden) und - falls erforderlich - bei Bedarf von dem Bedienpersonal modifiziert.

Das in der Negativform erzeugte Bauteil muss nun aus der Einbettmasse entfernt werden. Hierzu ist eine Ausbettvorrichtung 160 vorgesehen (siehe z.B. Ausbetteinrichtung 50, Fig. 10). Das Ausbetten kann grundsätzlich manuell erfolgen. Bevorzugt wird jedoch auch dieser Schritt vollständig oder zumindest teilweise automatisiert durchgeführt (z.B. "grobes" Ausbetten automatisiert, abschließendes "Endausbetten" manuell). Die hierfür erforderlich Betriebsparameter 162 und/oder ein entsprechendes Betriebsprogramm können von einem Bedienpersonal an der Vorrichtung 160 oder der Steuerung 100 eingegeben werden. Bevorzugt werden die entsprechenden Parameter oder das entsprechende Programm 162 jedoch auf Basis der Modelldaten 122 automatisch erzeugt oder ausgewählt (wobei bevorzugt auch die Art und/oder die Eigenschaften des Einbettmaterials berücksichtigt werden) und - falls erforderlich - bei Bedarf von dem Bedienpersonal modifiziert.

Beispielhaft wurde eine einzige Steuerung 100 dargestellt. Es ist aber auch denkbar, zwei oder mehrere Steuereinheiten vorzusehen, die jeweils Teile des Prozesses bzw. eine oder mehrere der vorstehend beschriebenen Funktionseinheiten 110, 120, 130, 140, 150, 160 steuern und/oder regeln. Die Steuereinheiten können auch zwischen einer übergeordneten Steuerung und den Funktionseinheiten geschaltet sein. Der Datenaustausch zwischen der Steuerung bzw. den Steuereinheiten und den Funktionseinheiten und/oder zwischen den Steuereinheiten untereinander und/oder zwischen den Funktionseinheiten untereinander (beispielhaft gezeigt an den Einheiten 120, 130; bei Bedarf können auch die anderen oder einige der anderen Einheiten miteinander in Verbindung stehen) erfolgt vorzugsweise über ein Netzwerk, z.B. über das Internet und/oder über ein lokales Netzwerk (drahtlos und/oder drahtgebunden). Teile des Systems können so räumlich getrennt voneinander angeordnet sein, um Ressourcen optimal zu nutzen.

Ggf. erforderliche Datenformatumwandlungen oder Modifikationen der Daten, z.B. eine Umwandlung von Visualisierungsdatensätzen in CAD-Datensätze o.ä., können an beliebiger Stelle im System vorgenommen werden. Gleiches gilt für die automatische oder semi-automatische Erzeugung und/oder Wahl der Modell- bzw. Betriebsparameter oder -daten 122, 132, 142, 152, 162.

Das System bzw. das entsprechende Verfahren basiert auf einer möglichst effizienten Nutzung virtueller Daten, um verschiedene Vorrichtungen, die zur Erzeugung eines Dentalbauteils erforderlich sind, zu steuern. Eingriffe eines Bedienpersonals werden minimiert, was mit Kostenvorteilen einhergeht. Die Vernetzung der Komponenten des Systems erlaubt die räumliche Trennung einzelner Prozessschritte, um jeweils spezifische Standortvorteile ausnutzen zu können. Beispielsweise kann die Planung des Dentalbauteils, also die virtuelle Vorbereitung der eigentlichen Herstellungsschritte, an einem anderen Ort stattfinden, als diese selbst.

### Bezugszeichenliste:

- 10: Dentalbauteil
- 12: Dentalbrennofen
- 12A: Ausbrennofen
- 14: virtuelles Modell
- 16: physisches Modell
- 18: Einbettmasse
- 18A: Einbettkörper
- 20: Negativform
- 22: Rohmaterialpellet
- 26: intraorales Scannen
- 30: physischer Grundkörper
- 30.V: virtueller Grundkörper
- 32: Kanal
- 32.R: ausgehärtetes Rohmaterial in Kanal 32
- 34: physischer Verbindungssteg
- 34.R: Steg aus ausgehärtetem Rohmaterial
- 34.V: virtueller Verbindungssteg
- 40: Scan-Vorrichtung
- 42: physisches Gebiss
- 42.V: virtuelles Gebiss
- 48: Presseinrichtung
- 50: Ausbetteinrichtung
- 50.1, 50.2: Düse
- 56: physisches Zahnfleisch
- 56.V: virtuelles Zahnfleisch
- 58: grafische Benutzeroberfläche
- 60: Symbolleiste
- 62: Grundplatte
- 64: Manschette
- 68: gesunder Zahn
- 70: schadhafter Zahn
- 70.V: virtueller schadhafter Zahn
- 72: virtueller Aufbau
- 74: physischer Aufbau
- 78: Zylinder
- 80: Pressstempel
- 82: Sockel
- 110: Rohdatenerfassungseinrichtung
- 112: Rohdaten
- 120: Modellplanungsmodul
- 122: Modelldaten
- 130: Modellherstellungseinrichtung
- 140, 150: programmierbarer Ofen
- 132, 142, 152, 162: Betriebsparameter, Betriebsprogramm
- 160: Ausbettvorrichtung

## Patentansprüche

1. Verfahren zur Herstellung eines Dentalbauteils (10), insbesondere eines Zahnersatzes oder eines -teilersatzes, umfassend folgende Schritte:
(i) Fertigung eines Modells (16) des Dentalbauteils,
(ii) Einbetten des Modells in einer Einbettmasse (18),
(iii) Entfernen des Modells aus der Einbettmasse, insbesondere durch Erhitzen oder Ausbrennen, um eine Negativform (20) des Modells zu erhalten,
(iv) Einbringen eines zur Herstellung des Dentalbauteils erforderlichen Rohmaterials (22) in die Negativform,
(v) Erzeugen des Dentalbauteils in der Negativform,
(vi) zumindest teilweise automatisiertes Ausbetten des Dentalbauteils auf Basis eines virtuellen Modells (14) des Dentalbauteils, **dadurch gekennzeichnet, dass** eine Ausbetteinrichtung (50, 160) zum Ausbetten des Dentalbauteils vorgesehen ist, die eine Steuereinheit umfasst, die die Ausbetteinrichtung auf Basis des virtuellen Modells steuert.

2. Verfahren nach Anspruch 1,
**dadurch gekennzeichnet , dass** das virtuelle Modell (14) auf einem 3D-Scan des Modells (16) und/oder einer Tomografie der Negativform (20) basiert und/oder dass das virtuelle Modell auf einem digitalen Modell des Dentalbauteils (10) basiert, dass mit Hilfe von virtuellen Daten eines Gebisses eines Patienten oder eines Teiles davon erzeugt wurde.

3. Verfahren nach Anspruch 2,
**dadurch gekennzeichnet , dass** die virtuellen Daten eines Gebisses eines Patienten oder eines Teiles davon auf Basis eines interoralen Scans und/oder eines Scans eines Negativabdrucks eines Gebisses eines Patienten oder eines Teiles davon erzeugt werden.

4. Verfahren nach zumindest einem der vorstehenden Ansprüche,
**dadurch gekennzeichnet , dass** ein Soll-Ist-Abgleich mittels des virtuellen Modells (14) und Daten einer Tomografie der Negativform (20) vorgenommen wird und das automatisierte Ausbetten auf Basis des Soll-Ist-Abgleichs angepasst wird.

5. Verfahren nach zumindest einem der vorstehenden Ansprüche,
**dadurch gekennzeichnet , dass** das teilweise automatisierte Ausbetten mittels eines abtragenden Fertigungsverfahrens erfolgt, insbesondere wobei das abtragende Fertigungsverfahren ein Druckluftstrahlen mit einem Strahlmittel und/oder ein Wasserstrahlen und/oder ein Fräsen umfasst.

6. Verfahren nach zumindest einem der vorstehenden Ansprüche,
**dadurch gekennzeichnet , dass** eine Abtragsrate bzw. eine Geschwindigkeit des Ausbettens anpassbar ist, insbesondere automatisch in Abhängigkeit eines Fortschritts des Ausbettens.

7. Verfahren nach Anspruch 6,
**dadurch gekennzeichnet , dass** die Negativform (20) in der Nähe des Dentalbauteils (10) mit einer niedrigeren Abtragsrate bzw. Geschwindigkeit abgetragen wird als in größerer Entfernung des Dentalbauteils.

8. Verfahren nach Anspruch 1,
**dadurch gekennzeichnet , dass** die Negativform (20) zumindest ein Mittel zur - virtuellen - Festlegung eines Modellkoordinatensystems relativ zu einem Koordinatensystem der Ausbetteinrichtung (50, 160) aufweist, mittels dem die Position und/oder Ausrichtung des Dentalbauteils (10) in der Negativform (20) in Bezug auf die Ausbetteinrichtung bestimmbar ist, und/oder dass die Negativform und/oder die Ausbetteinrichtung zumindest ein Ausrichtmittel, insbesondere zumindest eine optische Markierung und/oder eine mechanische Codierung aufweisen, mittels dem eine genaue Ausrichtung der Negativform in der Ausbetteinrichtung festlegbar ist.

9. Verfahren nach zumindest einem der vorstehenden Ansprüche,
**dadurch gekennzeichnet , dass** das Modell (16) des Dentalbauteils (10) mittels additiver Fertigung, insbesondere mittels 3D-Druck, hergestellt wird.

10. Verfahren nach zumindest einem der vorstehenden Ansprüche,
**dadurch gekennzeichnet , dass** das Modell (16) des Dentalbauteils (10) auf Basis des virtuellen Modells (14) erzeugt wird.

## Claims

1. A method of manufacturing a dental component (10), in particular a dental prosthesis or a partial dental prosthesis, comprising the following steps:
(i) producing a model (16) of the dental component;
(ii) embedding the model in an investment material (18);
(iii) removing the model from the investment material, in particular by heating or burning out, to obtain a negative mold (20) of the model;
(iv) inserting a raw material (22) required for manufacturing the dental component into the negative mold;
(v) producing the dental component in the negative mold; and
(vi) deflasking the dental component in an at least partly automated manner on the basis of a virtual model (14) of the dental component,
**characterized in that**
a deflasking device (50, 160) for deflasking the dental component is provided and comprises a control unit which controls the deflasking device on the basis of the virtual model.

2. A method in accordance with claim 1,
**characterized in that**
the virtual model (14) is based on a 3D scan of the model (16) and/or on a tomography of the negative mold (20); and/or **in that** the virtual model is based on a digital model of the dental component (10) that was produced with the aid of virtual data of a dentition of a patient or of a part thereof.

3. A method in accordance with claim 2,
**characterized in that**
the virtual data of a dentition of a patient or of a part thereof are generated on the basis of an interoral scan and/or of a scan of a negative impression of a dentition of a patient or of a part thereof.

4. A method in accordance with at least one of the preceding claims, **characterized in that**
a desired/actual comparison by means of the virtual model (14) and data of a tomography of the negative mold (12) is performed and the automated deflasking is adapted on the basis of the desired/actual comparison.

5. A method in accordance with at least one of the preceding claims, **characterized in that**
the partly automated deflasking takes place by means of a stripping manufacturing process, in particular with the stripping manufacturing process comprising a compressed air blasting using a blasting means, and/or a water blasting and/or a milling.

6. A method in accordance with at least one of the preceding claims, **characterized in that**
a removal rate or a speed of the deflasking is adjustable, in particular automatically in dependence on progress of the deflasking.

7. A method in accordance with claim 6,
**characterized in that**
the negative mold is removed at a lower removal rate or a lower speed in the vicinity of the dental component (10) than at a greater distance from the dental component.

8. A method in accordance with claim 1,
**characterized in that**
the negative mold (20) has at least one means for - virtually - defining a model coordinate system relative to a coordinate system of the deflasking device (50, 160), by which means the position and/or alignment of the dental component (10) in the negative mold (20) can be determined with respect to the deflasking device; and/or **in that** the negative mold and/or the deflasking device has/have at least one alignment means, in particular at least one optical marking and/or one mechanical coding, by which alignment means an exact alignment of the negative mold in the deflasking device can be defined.

9. A method in accordance with at least one of the preceding claims, **characterized in that**
the model (16) of the dental component (10) is manufactured by means of additive manufacturing, in particular by means of 3D printing.

10. A method in accordance with at least one of the preceding claims, **characterized in that**
the model (16) of the dental component (10) is produced on the basis of the virtual model (14).

## Revendications

1. Procédé de réalisation d'un composant dentaire (10), en particulier d'une prothèse dentaire ou d'une prothèse dentaire partielle, comprenant les étapes suivantes consistant à :
(i) fabriquer un modèle (16) du composant dentaire,
(ii) enrober le modèle dans une masse d'enrobage (18),
(iii) retirer le modèle hors de la masse d'enrobage, en particulier par chauffage ou par cuisson, afin d'obtenir un moule négatif (20) du modèle,
(iv) introduire dans le moule négatif une matière brute (22) nécessaire à la réalisation du composant dentaire,
(v) générer le composant dentaire dans le moule négatif,
(vi) démouler de façon au moins partiellement automatisée le composant dentaire en se basant sur un modèle virtuel (14) du composant dentaire,
**caractérisé en ce que**
il est prévu un dispositif de démoulage (50, 160) pour démouler le composant dentaire, qui comprend une unité de commande qui commande le dispositif de démoulage en se basant sur le modèle virtuel.

2. Procédé selon la revendication 1,
**caractérisé en ce que**
le modèle virtuel (14) est basé sur un scan 3D du modèle (16) et/ou sur une tomographie du moule négatif (20), et/ou
**en ce que** le modèle virtuel est basé sur un modèle numérique du composant dentaire (10), qui a été généré à l'aide de données virtuelles d'une dentition d'un patient ou d'une partie de celle-ci.

3. Procédé selon la revendication 2,
**caractérisé en ce que**
les données virtuelles d'une dentition d'un patient ou d'une partie de celle-ci sont générées sur la base d'un scan inter-oral et/ou d'un scan d'une empreinte négative d'une dentition d'un patient ou d'une partie de celle-ci.

4. Procédé selon l'une au moins des revendications précédentes, **caractérisé en ce que**
une comparaison théorique/réelle est effectuée à l'aide du modèle virtuel (14) et de données d'une tomographie du moule négatif (20), et le démoulage automatisé est adapté sur la base de la comparaison théorique/réelle.

5. Procédé selon l'une au moins des revendications précédentes, **caractérisé en ce que**
le démoulage partiellement automatisé est effectué à l'aide d'un procédé de fabrication par décapage, en particulier le procédé de fabrication par décapage comprenant une projection d'air comprimé avec un agent de projection et/ou une projection d'eau et/ou un fraisage.

6. Procédé selon l'une au moins des revendications précédentes, **caractérisé en ce que**
un taux de décapage ou une vitesse de démoulage est adaptable, en particulier automatiquement en fonction d'une progression du démoulage.

7. Procédé selon la revendication 6,
**caractérisé en ce que**
le moule négatif (20) à proximité du composant dentaire (10) est décapé avec un taux de décapage ou une vitesse plus faible qu'à une distance plus grande du composant dentaire.

8. Procédé selon la revendication 1,
**caractérisé en ce que**
le moule négatif (20) présente au moins un moyen pour la détermination - virtuelle - d'un système de coordonnées du modèle par rapport à un système de coordonnées du dispositif de démoulage (50, 160), à l'aide duquel la position et/ou l'orientation du composant dentaire (10) dans le moule négatif (20) peut être déterminée par rapport au dispositif de démoulage, et/ou en ce que le moule négatif et/ou le dispositif de démoulage présentent au moins un moyen d'orientation, en particulier au moins un marquage optique et/ou un codage mécanique permettant de déterminer une orientation précise du moule négatif dans le dispositif de démoulage.

9. Procédé selon l'une au moins des revendications précédentes, **caractérisé en ce que**
le modèle (16) du composant dentaire (10) est réalisé par fabrication additive, en particulier par impression 3D.

10. Procédé selon l'une au moins des revendications précédentes, **caractérisé en ce que**
le modèle (16) du composant dentaire (10) est généré sur la base du modèle virtuel.
